Europäisches Patentamt

European Patent Office

Office européen des brevets

Publication number: **0 291 660**

**A2**

# EUROPEAN PATENT APPLICATION

Application number: 88104560.3

Int. Cl.⁴ **G01N 21/31**

Date of filing: 22.03.88

Priority: 11.04.87 JP 89152/87

Date of publication of application:
23.11.88 Bulletin 88/47

Designated Contracting States:
**DE GB**

Applicant: **HITACHI, LTD.**
**6, Kanda Surugadai 4-chome**
**Chiyoda-ku Tokyo 101(JP)**

Inventor: **Harada, Katsuhito**
**697-9, Horiguchi**
**Katsuta-shi Ibaraki-ken(JP)**
Inventor: **Moriya Kazuo**
**4829-33, Nakane**
**Katsuta-shi Ibaraki-ken(JP)**
Inventor: **Iwata, Hiroji**
**663, Ichige**
**Katsuta-shi Ibaraki-ken(JP)**

Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

Atomic absorption spectrophotometer.

The present invention contemplates providing an atomic absorption spectrophotometer which is free from a reduction in the absorption sensitivity and an increase in the noises, which might otherwise follow a change in an element to be measured. For this purpose, a lens interposed between a light source and a spectroscope is made movable on an optical axis so that its position may be changed in accordance with the element to be measured.

FIG. 1

## ATOMIC ABSORPTION SPECTROPHOTOMETER

### BACKGROUND OF THE INVENTION

The present invention relates to an atomic absorption spectrophotometer and, more particularly, to an atomic absorption spectrophotometer suitable for improving the absorption sensitivity in the analysis of a metallic element and reducing the noises thereby to attain an excellent signal/noise ratio.

The atomic absorption spectrophotometer is constructed, as disclosed in U.S.P. No. 4,341,470, mainly of a light source (generally a hollow cathode lamp), an atomizing unit (e.g., a burner, a carbon tube furnace or a quartz cell), a spectroscope, a detecting unit and an arithmetic unit. An optical system is also used to form the image of the light source at the center of the atomizing unit and further on the entrance slit of the spectroscope. In case, however, a lens is used in the optical system, its refractive index differs in dependence upon the wavelength of an incident beam so that its focal length will change to move the imaging point. In case the lens interposed between the light source and the atomizing unit is made of quartz, for example, the imaging point shifts as far as about 60 nm (which may differ in accordance with the optical system and the size) with the wavelengths of 200 nm and 800 nm. The shortest wavelength to be used in the atomic absorption spectrophotometer is 193.7 nm for arsenic, whereas the longest wavelength is 852.1 nm for cesium. In a specific wavelength, therefore, the image of the light source is formed on the center of the atomizing unit and on the entrance slit of the spectroscope. This specific wavelength is determined at the center of a wavelength range to be used or within the wavelength range of an element which is frequently used for measurements. Generally speaking, the specific wavelength is frequently determined at 230 to 250 nm. As a result, the imaging point of the light source is at the longer distance from the center of the atomizing unit as the wavelength is the more apart from the specific value. The atomizing unit is exemplified by the burner, the carbon tube furnace or the quartz cell. In the most popular case of the burner, a standard burner has a length of 10 cm and a flame as wide as about 6 mm, whereas a high-temperature burner has a length of 5 cm and a width of 8 mm. As is well known in the art, the relation between the width of the flame and the luminous flux is such that the narrowest portion of the luminous flux is located at the center of the flame and becomes wider toward its two sides. This causes the outer portions of the luminous flux to goes off the flame so that it makes little contribution to the absorption. This is disclosed in "Atomic Absorption Analysis" written by Yasuda and Hasegawa and published by Kodansha. Still the worse, the divergence of the luminous flux having no contribution to the absorption is increased to drop the absorption sensitivity if the change in the wavelength invites the shift of the imaging point. If the imaging point of the atomizing unit shifts, no image is formed on the entrance slit of the spectroscope. In other words, the luminous flux diverges on the entrance slit so that more optical energy is lost to increase the noise component. Thus, the use of the optical system including the lens is accompanied by the reduction in the absorption sensitivity and the increase in the noises because of the change in the wavelength.

### SUMMARY OF THE INVENTION

An object of the present invention is to provide an atomic absorption spectrophotometer which, even if the element to be measured changes, can form the image of a light source without fail at the center of an atomizing unit to prevent any reduction in the absorption sensitivity and can form the image of the light source without fail on the entrance slit of a spectroscope to prevent any increase in the noises.

The above-specified object is attained by a structure equipped with moving means for storing in advance a wavelength according to an element to be measured and the distance of movement of a light source or the distance of movement of a first lens interposed between said light source and an atomizing unit and the distance of movement of a second lens interposed between said atomizing unit and an entrance slit of a spectroscope, so that the image of said light source may always be formed at the center of said atomizing unit and on the entrance slit of said spectroscope even if said element (or the wavelength for measurements) differs, and for automatically moving said light source of said first or second lens in response to an instruction of a computer according to the content stored according to said element.

Among the elements to be measured by the atomic absorption spectrophotometer, arsenic has the shortest wavelength of 193.7 nm, and cesium has the longest wavelength of 852.1 nm. According to the Japanese Industrial Standards (i.e., JIS), therefore, the wavelength of the atomic absorption spectrophotometer is written to range from 190 nm to 990 nm, and the material to be used for the lenses is highly pure quartz having an especially high transmissivity. The refractive indices of the quartz are:

| | |
|---|---|
| 1 565 | for 190 nm; |
| 1.550 | for 200 nm; |
| 1.488 | for 300 nm; |
| 1.462 | for 500 nm; |
| 1 455 | for 700 nm; and |
| 1 452 | for 900 nm. |

Since the refractive indices of quartz are different with different wavelengths, the lens optical system has different imaging points of light source with different wavelengths.

Incidentally, the optically relating parts in the present invention are the light source, the atomizing unit, and the entrance slit of the spectroscope, and the lenses are used between those recited parts. Moreover, the positions of the atomizing unit and the entrance slit of the spectroscope are structurally fixed. In order to form the light source image on the atomizing unit and entrance slit, therefore, parallel movements of the light source and/or the lenses in parallel with the optical axis are accomplished. The light source and/or the lenses are automatically moved to the optimum positions (or at the distances stored in advance) by storing the distances of movements according to the elmeent to be measured (or the wavelength) in advance in the memory of a computer and by inputting the element (or the wavelength) to the computer. Since the system is constructed in that way, the present invention can be embodied without any burden on the measurer.

## BRIEF DESCRIPTION OF THE DRAWINGS

Fig. 1 is a diagram showing the overall structure of an atomic absorption spectrophotometer according to the present invention; and

Figs. 2 to 6 are diagrams showing the relations between optical systems and imaging points.

## DESCRIPTION OF THE PREFERRED EMBODIMENT

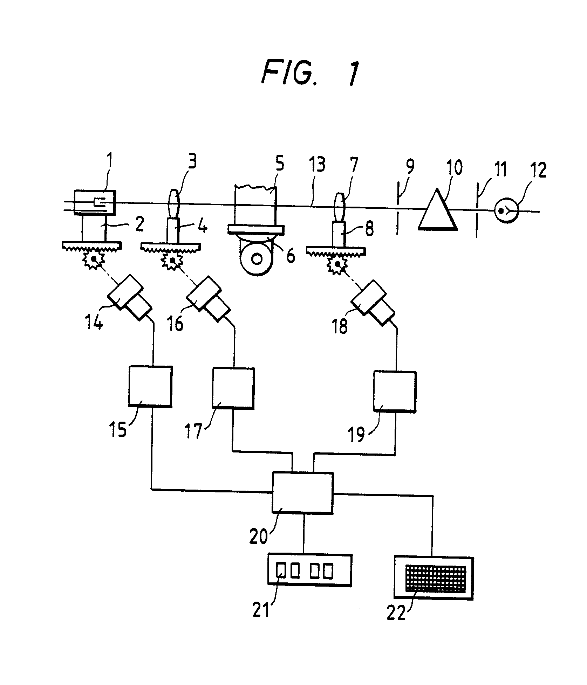

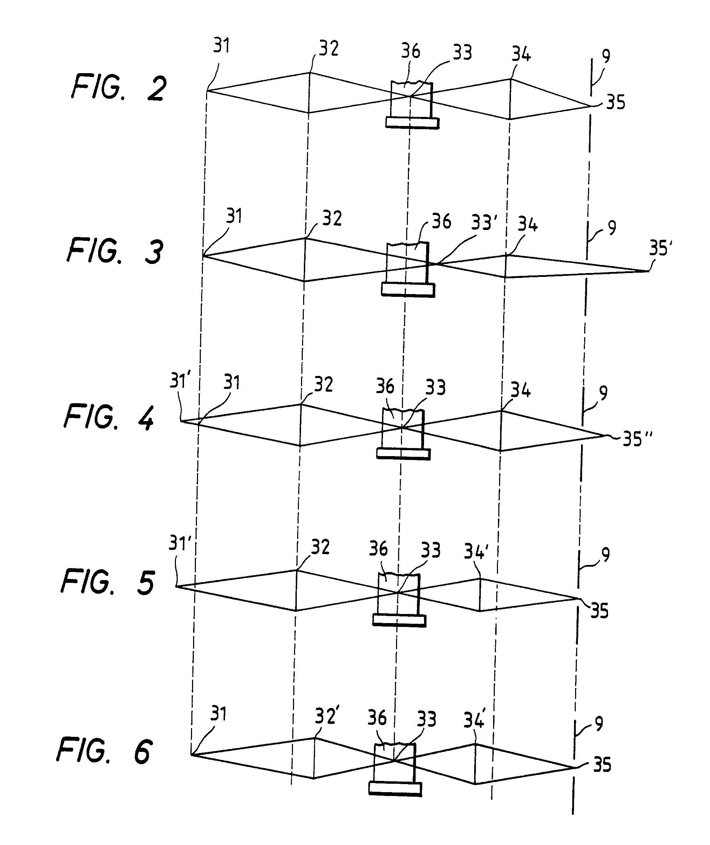

The present invention will be described in detail in the following in connection with the embodiment shown in Fig. 1 together with Figs. 2 to 6.

Fig. 1 is a diagram showing the structure of one embodiment of the atomic absorption spectrophotometer according to the present invention. In Fig. 1, a light source (which is generally exemplified by a hollow cathode lamp) 1 is mounted on a holder 2. The beam emanating from the light source 1 is condensed by a lens 3, which is mounted on a lens holder 4, and forms an image on a flame 5 which is generated over a burner chamber 6. This frame 5 may be replaced by the quartz cell or the carbon tube furnace and will be generally called the atomizing unit. The beam emitted by the light source 1 is atomically absorbed, when it passes through the flame 5, by a specimen (or, strictly speaking, a target element in the specimen). The beam having passed through the flame 5 diverges and is condensed again by a lens 7 mounted on a lens holder 8 until it forms an image on an entrance slit 9 of a spectroscope 10. From the rays separated by the spectroscope 10, only a ray having the target wavelength is extracted by an emission slit 11 and is detected by a detector 12. Reference numeral 13 denotes the optical axis or the passage of the beam. The optical system shown in Fig. 1 uses two lenses, but an actual apparatus may use one lens and one concave mirror.

Here, the lenses to be used in the optical system are generally made of quartz having an excellent transmissivity even for a short wavelength (e.g., 190 nm). Since the quartz lenses have different refractive indices according to the wavelength of the beam, there arises a phenomenon that the wavelengths become different with different elements to be measured so that the imaging points of the light source become different. From the standpoint of the absorption sensitivity (i.e., the atomic absorption for a constant density), the beam of the light source desirably forms an image at the center of the atomizing unit (i.e., the flame 5). This is disclosed in the "Atomic Absorption Analysis", which has been presented as an example of the prior art. If the effective use (which relates to the reduction in the noises) of light amount is taken into consideration, on the other hand, the light source image is also desirably formed on the entrance slit 9. In the actual apparatus, however, either or both the desires are frequently sacrificed. This is because an operational burden more than necessary is imposed upon the measurer so as to satisfy either or both of the desires according to the difference in the wavelength.

Therefore, the present invention contemplates providing means for maintaining effective use of the maximum absorption sensitivity and the maximum light amount without imposing the burden upon the measurer. More specifically, the holder 2 of the light source 1 of Fig. 1 is combined with a light source drive unit 14, which in turn is driven by a control unit 15. Likewise, the holder 4 of the lens 3 and the holder 8 of the lens 7 are combined with lens drive units 16 and 18, which in turn are driven by control units 17 and 19, respectively. These drives enable the light source 1 and the lenses 3 and 7 to be moved by the control units 15, 17 and 19. These movements are directed in parallel with the optical axis 13. The drive units 14, 16 and 18 are constructed in various manners including the combination of a rack and a pinion gear, as shown in Fig. 1. and are driven by a stepping motor (which may be replaced by another motor). Those control units 15, 17 and 19 are controlled by a computer 20. This computer 20 is equipped with a memory storing in advance the distances of movement dictating how long the light source 1 and the lenses 3 and 7 should be moved in accordance with the element or wavelength to be measured. The stored information is read out from the memory in accordance with the element or wavelength inputted through the input unit 21 of the computer 20 by the measurer. In response to this, the computer 20 issues instructions to control the control units 15, 17 and 19. Incidentally, the element or wavelength thus inputted by the measurer is displayed in a display unit 22.

Next, how the positions of the light source 1 and the lenses 3 and 7 are to be moved will be described with reference to the optical system diagrams shown in Figs. 2 to 6. Fig. 2 shows the states in which the individual parts are arranged according to computation from a specific wavelength. By the atomic absorption spectrophotometer, this specific wavelength is usually determined considering the elements of frequent use. Generally speaking, the specific wavelength is frequently calculated to a value ranging from 220 nm to 250 nm. The beam emitted from a light source position 31 is condensed in the position 32 (which will be referred to as a lens position A) of the lens 3 and forms an image in a light source imaging position 33 substantially at the center of the burner 36. After this, the focused beam is scattered and is condensed again in the position 34 (which will be referred to as a lens position B) of the lens 7 until it forms an image in the light source imaging position 35 of the entrance slit 9 of the spectroscope 10.

Fig. 3 shows the case of a wavelength longer than the specific value. Since the light source position 31, the lens position A 32 and the lens position B 34 are left as they are, the light source imaging position 33 shifts to a position 33' so that the light source imaging position 35 drastically shifts to a position 35'. In this state, it is apparent that the absorption sensitivity drops to increase the noises.

Fig. 4 shows the case in which only the light source position 31 is moved from the case of Fig. 3 to a position 31'. As a result, the light source imaging position 33 can be left as it is to prevent any drop of the absorption sensitivity. Since, however, no image is formed on the entrance slit 9, it seems that the light amount cannot be effectively used to invite more or less increase in the noise level.

Fig. 5 shows the case in which the lens position B 34 is also moved from the case of Fig. 4 to a position 34'. Thus, a light source image position 35" of Fig. 4 becomes the position 35 on the entrance slit 9 so that the light amount can be effectively used to prevent any increase in the noise level.

Fig. 6 shows the case in which the lens position A 32 is moved to a position 32' whereas the lens position B 34 is moved to a position 34 with the light source position 31 and the light source imaging positions 33 and 35 being unchanged. With this modification, too, the absorption sensitivity can be prevented from dropping, and the noise level can also be prevented from rising by making effective use of the light amount.

As in the present embodiment, the absorption sensitivity can be held at the maximum by moving the light source 1 or the lenses 3 and 7 in accordance with the wavelength, and the increase in the noise level can be prevented by making effective use of the light amount.

As has been described hereinbefore, according to the present invention, the imaging point of the light source can be held at the center of the atomizing unit and on the entrance slit of the spectroscope without fail even if the element or wavelength to be measured changes. Thus, the present invention can have an effect that the maximum absorption and the minimum noise level can be attained.

## Claims

1. An atomic absorption spectrophotometer comprising: a light source according to an element to be measured; an atomizing unit for atomizing said element to effect the absorption of a beam coming form said light source; a spectroscope for extracting a wavelength for measurement of said element; a detector for detecting the beam of the measured wavelength extracted by said spectroscope; and an arithmetic display unit for computing and displaying the value detected by said detector; and at least one lens disposed on an optical axis extending from said light source to said spectroscope, wherein the improvement resides in that siad lens is made movable on said optical axis.

2. An atomic absorption spectrophotometer according to Claim 1, wherein said lens is interposed between said light source and said atomizing unit and between said atomizing unit and said spectroscope and is made movable on said optical axis.

3. An atomic absorption spectrophotometer according to Claim 1, wherein said light source is made movable on said optical axis.

4. An atomic absorption spectrophotometer according to Claim 1, wherein the value of the moving distance of said lens in accordance with said measured element is stored so that said lens may be moved on the basis of the stored value.

5. An atomic absorption spectrophotometer according to Claim 3, wherein the value of the moving distance of said light source in accordance with said measured element is stored so that said light source may be moved on the basis of the stored value.

# FIG. 1

0 291 660

FIG. 2

FIG. 3

FIG. 4

FIG. 5

FIG. 6